# EUROPÄISCHE PATENTANMELDUNG

(11) **EP 0 557 803 A1**
(43) Veröffentlichungstag der Anmeldung: **01.09.1993**
(21) Anmeldenummer: 93102115.8
(22) Anmeldetag: 11.02.1993
(51) Int. Cl.: B01D 17/02, B01D 61/14, C02F 1/44

(54) **Trennvorrichtung für Öl/Wasser-Gemische**

(30) Priorität: 28.02.1992 DE 9202643 U
(71) Anmelder: ULTRAFILTER GmbH, D-42781 Haan (DE)
(72) Erfinder: Schlieter, Martin, 42719 Solingen (DE)
(74) Vertreter: König, Reimar, Dr.-Ing.

(57) **Zusammenfassung**

Eine Trennvorrichtung für Flüssigkeiten, insbesondere von Wasser und Öl besteht aus einem Sammelbehälter (1) für Wasser und Öl, einer ersten Kammer (2) im Sammelbehälter, einem Anschluß (3) für ein Gemisch aus Gas, Wasser und Öl an der ersten Kammer, einer zweiten Kammer (4), einem zwischen der ersten und der zweiten Kammer angeordneten Koaleszenzfilter (5), einem Ultrafiltrationselement (6), einem am Boden (7) des Sammelbehälters ansaugenden und nach Durchströmen der Druckseite des Ultrafiltrationselements in den Sammelbehälter zurückfördernden Pumpenkreislauf (8, 9, 10), einem vom Permeat des Ultrafiltrationselements durchströmten Aktivkohlefilter (11), einem Ölüberlauf (12) am Sammelbehälter und einem Reinwasserablauf (13) nach dem Aktivkohlefilter.

## Beschreibung

Die Erfindung betrifft eine Trennvorrichtung für Flüssigkeiten, insbesondere von Wasser und Öl.

An derartige Trennvorrichtungen werden immer höhere Anforderungen gestellt, um Gefahren für die Umwelt zu vermeiden. Diese Anforderungen an eine leistungsfähige Trennvorrichtung lassen sich verdeutlichen, wenn man bedenkt, daß sich beispielsweise aus der weltweiten Drucklufterzeugung von etwa 30 Millionen m³/min. etwa jährlich 100 Millionen m³ Kondensat mit einer darin enthaltenen Ölmenge von etwa 30.000 m³ ergeben. Ein unzureichendes Abscheiden des Öls aus dem Kondensat stellt ein besonderes Gefahrenpotential für die Umwelt dar.

Aufgrund der gesetzlichen Vorschriften, die eine Aufbereitung des ölhaltigen Wassers nach den allgemein anerkannten Regeln der Technik fordern, haben Betreiber von Kompressoren die Wahl zwischen einer Entsorgung des ölhaltigen Kondensats durch eine Fachfirma, was zwischen DM 300,-- und DM 600,-- je Kubikmeter Kondensat kostet, und einer Eigenaufbereitung mittels Trennvorrichtungen.

In der deutschen Offenlegungsschrift 40 33 112 ist eine Öl- und Benzinabscheideanlage beschrieben, die aus einem Behälter besteht, der mittels Zwischenwänden in drei Kammern aufgeteilt ist. In der mittleren Kammer ist ein Scheibenskimmer angeordnet, der auf der Oberfläche schwimmendes Öl aufnimmt und einem außerhalb des Behälters befindlichen Auffangbehälter zuführt. Bevor das Wasser die Anlage verläßt, wird es noch durch mindestens ein Filterelement geführt. Nachteilig ist bei dieser bekannten Anlage, daß sie ein verhältnismäßig großes Volumen erfordert, um das Trennen der Wasser-Ölemulsion duch Schwerkraftwirkung zu erreichen, da keinerlei Hilfsmittel, die diese Trennung beschleunigen könnten, vorhanden sind.

Der Erfindung liegt die Aufgabe zugrunde, eine Trennvorrichtung zu schaffen, die bei einfacher und kompakter Bauweise hochreines, praktisch ölfreies Wasser zu gewinnen gestattet.

Ausgehend von dieser Aufgabenstellung besteht die Lösung darin, daß die Trennvorrichtung erfindungsgemäß einen Sammelbehälter für Wasser und Öl, eine erste Kammer im Sammelbehälter, einen Anschluß für ein Gemisch aus Gas, Wasser und Öl an der ersten Kammer, eine zweite Kammer, einen zwischen den beiden Kammern angeordneten Koaleszenzfilter, ein Ultrafiltrationselement, einen am Boden des Sammelbehälters ansaugenden und nach Durchströmen der Druckseite des Ultrafiltrationselements in den Sammelbehälter zurückfördernden Pumpenkreislauf, einen vom Permeat des Ultrafiltrationselements durchströmten Aktivkohlefilter, einen Ölüberlauf am Sammelbehälter und einen Reinwasserablauf nach dem Aktivkohlefilter besitzt.

Die erste Kammer dient als Schmutzauffangkammer, in die das Wasser-Ölgemisch beruhigt und ohne Verwirbelung geleitet wird, so daß keine erneute Emulsionsbildung stattfindet. Die mitgeführten festen Verunreinigungen lagern sich während der Beruhigung des Flüssigkeitsstroms auf dem Boden der ersten Kammer ab. Im sich anschließenden Koaleszenzfilter zwischen der ersten und der zweiten Kammer bleiben kleinste Öltröpfchen an dem Filter hängen, koalieren am Ende der Filterstrecke zu größeren Tropfen und steigen dadurch schneller an die Oberfläche. Das aufgeschwommene Öl bildet einen Film, der durch den in der Höhe verstellbaren Ölüberlauf abgeschöpft und in einen Ölkanister geleitet wird. Zusätzlich wird das Öl im Sammelbehälter mittels des Ultrafiltrationselements aufkonzentriert, da am Boden des Sammelbehälters die Öl-Wasseremulsion angesaugt und nach Durchströmen der Druckseite des Ultrafiltrationselements in den Sammelbehälter über einen Pumpenkreislauf zurückgefördert wird.

Reines Wasser durchdringt die Poren des Ultrafiltrationselements und bildet das sog. Permeat, das noch durch einen Aktivkohlefilter hindurchgeführt wird, bevor es in die Kanalisation gelangt. Dieser Aktivkohlefilter dient dazu, Bestandteile festzuhalten, die durch Fehler des Ultrafiltrationselements wie fertigungstechnische Mängel oder Verletzung der Membran während des Betriebes durch scharfe oder abrasive Partikel oder aufgrund zu kleiner Molekülgröße in das Permeat gelangen. Auch Tenside oder gelöste organische Inhaltsstoffe werden durch den Aktivkohlefilter festgehalten.

Vorzugsweise kann im Sammelbehälter eine dritte, mit dem Bodenbereich der zweiten Kammer verbundene Kammer als Umwälzbehälter für den Pumpenkreislauf des Ultrafiltrationselements angeordnet sein, wobei die Verbindung zwischen der zweiten und der dritten Kammer vorteilhafterweise aus einem bis zum Bodenbereich der zweiten Kammer reichenden Überlaufrohr besteht.

Auf diese Weise läßt sich ein kontinuierliches Ölabschöpfen mittels eines Ölablaufs durchführen, da sich die Flüssigkeitsstände in der ersten und der zweiten Kammer nicht verändern. Da der Umwälzbehälter im Interesse einer kompakten Bauweise der Trennvorrichtung ein verhältnismäßig geringes Volumen besitzt, kann sich die Ölkonzentration hier sehr schnell erhöhen. Dies kann dazu führen, daß eine gleichmäßig hohe Permeatleistung schwierig zu erreichen ist bzw. kurze Reinigungsintervalle für das Ultrafiltrationselement erforderlich werden.

Um dies zu vermeiden, kann von der Rückleitung des Pumpenkreislaufs eine Abzweigleitung zur ersten Kammer geführt werden, so daß nicht nur der Inhalt des Umwälzbehälters durch das Ultrafiltrationselement, sondern praktisch der gesamte Inhalt der Trennvorrichtung kontinuierlich umgewälzt werden. Dies hat den zusätzlichen Vorteil, daß die durch die Pumpleistung entstehende Erwärmung der Öl-Wasseremulsion besser an die Umgebung abgegeben wird.

Das Gas-, Wasser-, Ölgemisch kann vorzugsweise in einer Druckentlastungskammer im Anschluß an den Einlauf getrennt werden. Das Gas entspannt und wird über einen geräuschdämmenden Filter ins Freie geführt, das Wasser-Ölgemisch beruhigt und ohne Verwirbelung in die erste Kammer geleitet.

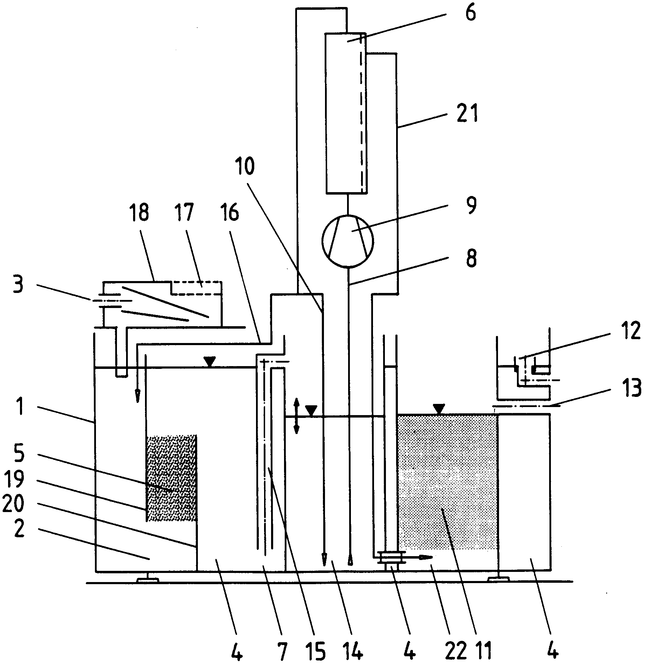

Die Erfindung wird nachstehend anhand eines in der Zeichnung dargestellten Ausführungsbeispiels des näheren erläutert.

Die erfindungsgemäße Trennvorrichtung besitzt einen Sammelbehälter 1 mit einer ersten Kammer 2, in die über einen Anschluß 3 mit einer Druckentlastungskammer 18, von der aus die entspannte Druckluft über einen geräuschdämmenden Filter 17 ins Freie abgeleitet wird, das Öl-Wassergemisch beruhigt und ohne Verwirbelung gelangt. Diese erste Kammer 2 dient als Schmutzauffangkammer, in die das Öl-Wassergemisch so schonend eingeführt wird, daß keine erneute Emulsionsbildung stattfindet. Die mitgeführten festen Verunreinigungen lagern dich während der Beruhigung des Flüssigkeitsstroms auf dem Behälterboden ab. Im Sammelbehälter 1 ist eine zweite Kammer 4 angeordnet, die von der ersten Kammer 2 durch Trennwände 19, 20 getrennt ist. Zwischen den Trennwänden 19, 20 ist ein Koaleszenzfilter 5 angeordnet.

In diesem Koaleszenzfilter bleiben kleinste Öltröpfchen hängen und koalieren beim Aufsteigen zu größeren Tropfen. Die größeren Tropfen steigen schneller an die Oberfläche der Flüssigkeit in der zweiten Kammer 4. Das aufgeschwommene Öl bildet eine Schicht, die durch einen in der Höhe verstellbaren Ölüberlauf 12 abgeschöpft und in einen nicht dargestellten Ölkanister geleitet wird.

Ein Ultrafiltrationselement 6 dient dazu, im Bereich des Bodens 7 des Sammelbehälters 1 aufgenommene Flüssigkeit aufzukonzentrieren. Zu diesem Zweck wird die Flüssigkeit im Bodenbereich über eine Saugleitung 8 von einer Umwälzpumpe 9 angesaugt und über die Druckseite des Ultrafiltrationselements 6 geführt. Von dort gelangt die Flüssigkeit über eine Druckleitung 10 in den Sammelbehälter 14 zurück. Im Ultrafiltrationselement 6 ist eine im einzelnen nicht dargestellte Membran angeordnet, über die die Öl-Wasseremulsion unter Druck geleitet wird. Die Porengröße dieser Membran ist so eingestellt, daß reines Wasser durch die Poren der Membran hindurchtreten kann und als Permeat über eine Leitung 21 abgeführt wird. Die Molekülgröße des im Wasser enthaltenen Öls übersteigt die Porengröße der Membran, so daß das Öl auf der Druckseite zurückgehalten wird. Somit ergibt sich im Kreislauf 8, 9, 10 eine Aufkonzentration des Öls.

Im dargestellten Beispiel münden die Saugleitung 8 und die Druckleitung 10 in einer dritten Kammer 14, die über ein Überlaufrohr 15 mit der zweiten Kammer 4 verbunden ist. Das Überlaufrohr 15 reicht bis zum Bodenbereich der zweiten Kammer 4, so daß auf der Wasseroberfläche schwimmendes Öl nicht in die dritte, als Umwälzbehälter dienende Kammer 14 gelangt. Um den gesamten Flüssigkeitsinhalt der Trennvorrichtung in einem ständigen Kreislauf durch das Ultrafiltrationselement 6 zu führen, ist eine Abzweigleitung 16 von der Druckleitung 10 zur ersten Kammer 2 geführt. Die über diese Abzweigleitung 16 in die erste Kammer 2 gelangende Flüssigkeit fließt über das Überlaufrohr 15 wieder in die dritte Kammer 14 zurück, enthält aber nur geringe Mengen an Öl, da das Überlaufrohr 15 im Bereich des Bodens 7 mündet. Auf diese Weise wird ein Teil der sich in der dritten Kammer 14 befindenden Flüssigkeit dauernd erneuert, während aufkonzentrierte Flüssigkeit über die Abzweigleitung 16 in die erste Kammer 2 zurückgeführt wird, so daß das Öl, das über die Abzweigleitung 16 in die erste Kammer 2 gelangt, in der zweiten Kammer 4 abgeschieden wird und sich über den Überlauf 12 ableiten läßt.

Über die Permeatleitung 21 wird das Permeat aus dem Ultrafiltrationselement 6 einer Aktivkohlefilterkammer 22 zugeführt, in der ein Aktivkohlefilterelement 11 angeordnet ist. Mittels dieses Aktivkohlefilterelements 11 lassen sich etwaige noch in dem Permeat befindliche Bestandteile zurückhalten, insbesondere im Permeat gelöste organische Stoffe wie Tenside oder lösliche Ölbestandteile.

Nach Durchströmen des Aktivkohlefilterelements 11 verläßt das Wasser über den Reinwasserablauf 13 die Anlage.

## Patentansprüche

1. Trennvorrichtung für Flüssigkeiten, insbesondere von Wasser und Öl mit
- einem Sammelbehälter (1) für Wasser und Öl,
- einer ersten Kammer (2) im Sammelbehälter,
- einem Anschluß (3) für ein Gemisch aus Gas, Wasser und Öl an der ersten Kammer,
- einer zweiten Kammer (4),
- einem zwischen der ersten und zweiten Kammer angeordneten Koaleszenzfilter (5),
- einem Ultrafiltrationselement (6),
- einem am Boden (7) des Sammelbehälters ansaugenden und nach Durchströmen der Druckseite des Ultrafiltrationselements in den Sammelbehälter zurückfördernden Pumpenkreislauf (8, 9, 10),
- einem vom Permeat des Ultrafiltrationselements durchströmten Aktivkohlefilter (11),
- einem Ölüberlauf (12) am Sammelbehälter und
- einem Reinwasserablauf (13) nach dem Aktivkohlefilter.

2. Vorrichtung nach Anspruch 1, dadurch gekennzeichnet, daß im Sammelbehälter (1) eine dritte, mit dem Bodenbereich (7) der zweiten Kammer (4) verbundene Kammer (14) als Umwälzbehälter für den Pumpenkreislauf (8, 9, 10) des Ultrafiltrationselements (6) angeordnet ist.

3. Vorrichtung nach Anspruch 2, dadurch gekennzeichnet, daß die Verbindung zwischen der zweiten und der dritten Kammer (4, 14) aus einem bis zum Bodenbereich (7) der zweiten Kammer (4) reichenden Überlaufrohr (15) besteht.

4. Vorrichtung nach einem der Ansprüche 1 bis 3, dadurch gekennzeichnet, daß von der Rückleitung (10) des Pumpenkreislaufs (8, 9, 10) eine Abzweigleitung (16) zur ersten Kammer (2) führt.

5. Vorrichtung nach einem der Ansprüche 1 bis 4, dadurch gekennzeichnet, daß das Gas-, Wasser-, Ölgemisch in einer Druckentlastungskammer (18) getrennt, das Gas entspannt und über einen geräuschdämmenden Filter (17) ins Freie abgeleitet und das Wasser-Ölgemisch beruhigt und ohne Verwirbelung in die erste Kammer (2) geführt wird.
